# EUROPÄISCHE PATENTSCHRIFT

(11) **EP 0 464 466 B1**
(45) Veröffentlichungstag und Bekanntmachung des Hinweises auf die Patenterteilung: **31.08.1994**
(21) Anmeldenummer: 91110025.3
(22) Anmeldetag: 19.06.1991
(51) Int. Cl.: C09D 161/00, C08F 299/02

(54) **Strahlenhärtbare Bindemittel**
Radiation curable binder
Liant durcissable par irradiation

(30) Priorität: 29.06.1990 DE 4020766
(43) Veröffentlichungstag der Anmeldung: 08.01.1992
(73) Patentinhaber: BASF Aktiengesellschaft, 67063 Ludwigshafen (DE)
(72) Erfinder: Lang, Reinhard, Dr., W-6730 Neustadt (DE); Beck, Erich, Dr., W-6721 Harthausen (DE); Keil, Edmund, W-6700 Ludwigshafen (DE); Nuber, Adolf, Dr., W-6737 Boehl-Iggelheim (DE); Petersen, Harro, Dr., W-6710 Frankenthal (DE); Renz, Hans, Dr., W-6701 Meckenheim (DE); Schmidt, Horst, Dr., NL-6862 HS Oosterbeek (DE); Weiss, Wolfram, Dr., W-6704 Mutterstadt (DE)

(56) Entgegenhaltungen:
- DE-A- 2 550 740

## Beschreibung

Die vorliegende Erfindung betrifft strahlenhärtbare Bindemittel, erhältlich durch Umsetzung von
A) Amin-Formaldehyd-Kondensaten mit einem Molverhältnis von Formaldehyd zu Aminogruppen von 1 : 1 bis 2 : 1 mit
B) mindestens eine frei Hydroxylgruppe aufweisenden Estern der Acrylsäure oder der Methacrylsäure mit Polyalkoholen, die zwei bis vier alkoholische Hydroxylgruppen enthalten, in Gegenwart von Säuren mit einem pK-Wert < 3,0 als Katalysator unter Abdestillieren flüchtiger Reaktionsprodukte unter vermindertem Druck, dadurch gekennzeichnet, daß pro Methyloläquivalent der Komponente A) 0,1 bis 0,3 Hydroxyäquivalente der Komponente B) verwendet werden.

Es ist allgemein bekannt, daß Bindemittel, die monoolefinisch ungesättigte Gruppen wie beispielsweise Acrylatgruppen tragen, durch energiereiche Strahlung gehärtet werden können.

Solche Bindemittel können bei der Herstellung von Überzugsmassen verwendet werden.

Dabei wird die Strahlenhärtung häufig nur zur schnellen Anhärtung benutzt, um zu verhindern, daß die beschichteten Gegenstände aneinanderkleben, was besonders bei der Massenproduktion von beschichteten Gegenständen von Bedeutung ist.

Aus der DE-A 25 50 740 sind strahlungshärtbare Überzugsmassen bekannt, die als Bindemittel (meth)acrylgruppentragende Aminoplastharze enthalten. Diese überzugsmassen enthalten jedoch größere Mengen an freien (Meth)acrylatmonomeren, was bei der Verarbeitung zu Problemen bezüglich der Umweltbelastung einerseits und der anwendungstechnischen Eigenschaften andererseits führt; überzugsmassen mit einem Gehalt von mehr als 1 Gew.-% Restmonomeren sind nämlich kennzeichnungspflichtig.

Aufgabe der vorliegenden Erfindung war es, strahlenhärtbare Bindemittel für überzugsmassen zur Verfügung zu stellen, die bei geringem Gehalt an freiem (Meth)acrylat zu Beschichtungen mit guten anwendungstechnischen Eigenschaften führen.

Demgemäß wurden die eingangs definierten strahlungshärtbaren Bindemittel gefunden, die durch Umsetzung von Amin-Formaldehyd-Kondensaten mit freien Hydroxylgruppen aufweisenden Estern der (Meth)acrylsäure erhältlich sind.

Als Komponenten A) werden Kondensationsprodukte aus Formaldehyd und Aminoplastbildnern umgesetzt, wobei als Aminoplastbildner aminogruppenhaltige Verbindungen wie beispielsweise Harnstoff, Melamin, Benzoguanamin, Acetoguanamin, Acetylendiharnstoff, Ethylenharnstoff oder Propylenharnstoff in Betracht kommen; pro Aminoäquivalent wurden 1 bis 2 Äquivalente Formaldehyd eingesetzt. Die Herstellung der Kondensate kann nach dem Fachmann bekannten verfahren in schwach alkalischen Medien erfolgen, wobei je nach Reaktionsbedingungen nieder- oder höher-kondensierte Produkte entstehen können. Vorzugsweise wird Hexamethylolmelamin verwendet.

Nach einer bevorzugten Ausführungsform können die Kondensate A) in partiell oder vollständig mit C₁-C₆-Monoalkoholen veretherter Form vorliegen. Die Veretherung kann nach bekannten Verfahren im sauren Medium durchgeführt werden. Als Alkohole werden vorzugsweise Methanol, aber auch Isobutanol, Butanol oder Gemische aus Methanol mit Isobutanol oder Butanol verwendet. Als veretherte Komponente A) wird vorzugsweise Hexamethoxymethylmelamin verwendet.

Als Komponenten B) kommen freie Hydroxylgruppen aufweisende Ester der Acrylsäure oder der Methacrylsäure mit Polyalkoholen, die zwei bis vier alkoholische Hydroxylgruppen enthalten, in Betracht. Solche Polyalkohole können polymere, mit Hydroxylgruppen substituierte Verbindungen wie Polyesterole oder Polyetherdiole oder bevorzugt gesättigte C₂-C₁₅-Diole, -Triole oder Tetraole wie beispielsweise Ethandiol, Propandiol, Butandiol, Pentandiol, Hexandiol, Glycerin, Pentaerythrit sein. Entsprechende Komponenten B) sind dann beispielsweise Hydroxyethylacrylat, Hydroxypropylacrylat, Hydroxylhexylacrylat, Glycerindiacrylat, Pentaerythrittiacrylat. Besonders bevorzugt ist Butandiolmonoacrylat.

Die Menge an B) wird so bemessen, daß pro Methyloläquivalent der Komponente A) 0,1 bis 0,3 Hydroxyläquivalente der Komponente B) verwendet werden.

Zusätzlich können noch 0,02 bis 0,4 Gew.-%, bezogen auf die Menge der Komponente B), eines Polymerisationsinhibitors C) zugesetzt werden, wodurch die Selbstpolymerisation der Komponete B) verhindert werden kann. Als Inhibitoren eignen sich beispielsweise Hydrochinon, Hydrochinonmonoalkylether, 2,5-Di-tert.-butyl-4-methyl-phenol oder Phenothiazin.

Die Umsetzung von A) mit B) erfolgt in Gegenwart katalytischer Mengen von organischen oder anorganischen Säuren mit einem pH-Wert < 3,0. Als Säuren kommen beispielsweise Salzsäure, Schwefelsäure, Oxalsäure, Maleinsäure, Phthalsäure oder para-Toluolsulfonsäure in Betracht. Üblicherweise werden pro Methyloläquivalent der Komponente A) 1 mVal bis 30 mVal Säure einge-Setzt.

Die Umsetzung kann bei Temperaturen von 50 bis 150°C, vorzugsweise 60 bis 120°C, durchgeführt werden.

Durch das Arbeiten bei vermindertem Druck von 0,01 bis 0,25 bar, vorzugsweise 0,05 bis 0,15 bar, können während der Reaktion flüchtige Bestandteile des Reaktionsgemisches abdestilliert werden.

Die Reaktion kann durch Neutralisation der Säure mit Basen wie wäßriger Natronlauge oder Alkylaminen wie beispielsweise Triethylamin, Tributylamin oder Alkanolaminen wie Dibutylethanolamin, Diethanolamin oder Triethanolamin beendet werden, wobei der Endpunkt so gewählt wird, daß die Neutralisation dann erfolgt, wenn mindestens 90 Gew.-% des theoretisch entstehenden Methanols abdestilliert sind.

Nach Beendigung der Reaktion erfolgt möglicherweise eine weitere Destillation bei ca. 50 bis 100 mbar, um noch Restmengen an flüchtigen Komponenten möglichst weitgehend zu entfernen.

Man erhält die erfindungsgemäßen Bindemittel als klare, farblose bis schwach gelbgefärbte hochviskose Harze mit einer Viskosität von ca. 5 bis 10 Pa·s (23°C) mit einem Gehalt an freier Komponente B der in der Regel unter 1 Gew.-% liegt.

Die erfindungsgemäßen Harze eignen sich hervorragend als Bindemittel für strahlungshärtbare Überzugsmassen, wobei die Harze in Mengen von 10 bis 100 Gew.-%, bezogen auf gesamte Harzmasse, verwendet werden. Niedrigviskose Harze stellen für sich schon brauchbare überzugsmassen dar. Höherviskose Harze können mit flüssigen copolymerisierbaren organischen Verbindungen ("Reaktivverdünner") verdünnt werden, wobei üblicherweise 0 bis 60 Gew.-%, bezogen auf die überzugsmasse, an Reaktivverdünner verwendet werden. Als geeignete Reaktivverdünner kommen beispielsweise Butandioldiacrylat, Hexandioldiacrylat, Trimethyloldiacrylat, Trimethylolpropantriacrylat oder Tripropylenglycoldiacrylat in Betracht.

Neben den erfindinngsgemäßen Harzen können die überzugsmassen noch 0 bis 90 Gew.-% an weiteren photopolymerisierbaren Bindemitteln wie beispielsweise Polyesteracrylate, Polyetheracrylate, Polyurethanacrylate oder acrylatmodifizierte Epoxidharze enthalten.

Zusätzlich können den überzugsmassen noch bis zu 30 Gew.-% an Lösungsmitteln, wie sie für Lackanwendungen üblich sind, enthalten, beispielsweise Aromaten, Ester, Ketone, Alkohole oder Gemische solcher Lösungsmittel.

Die Lösungsmittel müssen vor der Strahlungshärtung jedoch weitgehendst entfernt werden. Weiterhin können noch konventionelle Lackbindemittel wie beispielsweise Polyesterharze, Alkydharze, Polyacrylatharze sowie Lackvernetzer wie beispielsweise Aminoharze, Isocyanate oder Epoxidharze in Mengen bis zu 30 Gew.-% zugesetzt werden.

Die Überzugsmassen können außerdem noch 0 bis 80 Gew.-% an Pigmenten, wie sie für lacktechnische Anwendungen geeignet sind, enthalten.

Ferner können noch übliche Hilfsmittel wie Thixotropiermittel, Verlaufsmittel, Mattierungsmittel, Entlüftungsmittel oder Gleitmittel in Mengen bis zu 10 Gew.-% verwendet werden.

Die Aushärtung kann entweder mit Hilfe von Elektronenstrahlen mit einer Energie von 100 bis 400 kV und einer Dosis von 0,5 bis 10 Mrad oder durch UV-Licht mit einer Wellenlänge von 220 bis 450 nm und einer Dosis von 20 bis 1000 mJ/cm³ erfolgen. Bei der Aushärtung mit UV-Licht werden dem Überzugsmassen zweckmäßigerweise Photoinitiatoren wie Benzildimethylketal, Benzophenon, oder Acylphosphinoxiden, gegebenenfalls zusammen mit Coinitiatoren wie z.B. Dimethylethanolamin, in Mengen von 0,5 bis 10 Gew.-% zugesetzt.

Zusätzlich zur Strahlenhärtung kann eine Aushärtung durch Trocknen bzw. Einbrennen bei 30 bis 200°C oder durch Säinrekatalyse erfolgen, wobei als saure Katalysatoren Verbindungen wie beispielsweise p-Toluolsulfonsäure, Maleinsäure oder Phosphorsäure in Mengen von 0,2 bis 10 Gew.-% zugegeben werden können.

Eine solche zusätzliche Härtung empfiehlt sich vor allem auch bei stark pigmentierten Überzugsmassen, aber auch bei der Beschichtung von anspruchsvoll strukturierten Formkörpern wie beispielsweise Stühlen oder anderen Bedarfsgegenständen, bei denen nicht gewährleistet ist, daß die Strahlung die gesamte zu härtende Oberfläche erfaßt.

Die erfindungsgemäßen überzugsmassen eignen sich zum Beschichten von Holz, Metall, Papier oder Kunststoff.

Die Beschichtungen weisen eine gute Beständigkeit gegen mechanische Beanspruchungen auf.

### Beispiel 1

Ein Gemisch aus 390 g (1 mol) Hexamethoxymethylmelamin, 163 g (1,13 mol) Butandiolmonoacrylat, 0,2 g (0,9 mol), 2,5-Di-tert.-butyl-4-methylphenol und 2 g (11 mmol) p-Toluolsulfonsäure wurde auf 90°C erhitzt. Anschließend wurden während einer Zeitspanne von 30 min bei einer Temperatur von 80°C und einem Druck von 0,11 bis 0,14 bar ca. 45 g leichflüchtige Bestandteile in eine Kühlfalle abdestilliert. Dann wurde das Reaktionsgemisch mit Tributylamin neutralisiert und anschließend einer weiteren Destillation bei 110°C und 0,07 bis 0,1 bar unterworfen, wobei noch 5 g an flüchtigen Bestandteilen abdestilliert wurden. Aus dem Destillationsrückstand wurden durch Filtration 510 g eines Harzes mit einer Viskosität von ca. 5 Pa.s (23°C) erhalten.

Der gaschromatographisch bestimmte Gehalt an freiem Butandiolmonoacrylat lag unter 0,5 Gew.-%.

### Beispiel 2 (zum Vergleich)

### Herstellung eines Bindemittels nach Beispiel 1 der deutschen Offenlegungsschrift DE-OS 25 50 740

Ein Gemisch aus 390 g (1 mol) Hexamethoxymethylmelamin, 432 g (3,0 mol) Butandiolmonoacrylat, 0,5 g (0,46 mol) Hydrochinon, 4,7 g konz. Salzsäure und 240 g Cyclohexan wurde zum Sieden erhitzt, wobei über einen Wasserabscheider ein azeotropes Gemisch aus Wasser und Methanol entfernt wurde. Nach ca. 90 min. war die Methanolabscheidung beendet. Danach wurde das Cyclohexan durch Vakuumdestillation bei 90°C entfernt.

Der gaschromatographisch ermittelte Gehalt an freiem Butandiolmonoacrylat betrug 11 Gew.-%.

### Verarbeitungsbeispiele

### Beispiel A

100 g des nach Beispiel 1 erhaltenen Harzes wurden mit 4 g Benzildimethylketal versehen und mit 12 g Butylacetat verdünnt, so daß die Viskosität des Gemisches 0,5 Pa.s (23°C) betrug. Der so erhaltene Lack wurde mit einer Naßfilmdicke von 25 *µ*m auf ein zinkphosphatiertes Stahlblech aufgerakelt und nach zweiminütigem Ablüften zur Aushärtung mit einer Bandgeschwindigkeit von 5 m/min unter einer Quecksilberhochdruckröhre mit einer Leistung von 80 Watt/cm durchgefahren. Der schon nach Belichten nagelharte, glänzende Film wurde anschließend 20 min bei 170°C eingebrannt.

Die anwendungstechnischen Daten sind in der Tabelle aufgelistet.

### Beispiel B (zum Vergleich)

100 g des nach Beispiel 2 erhaltenen Harzes wurden mit 4 g Benzildimethylketal versetzt und mit 3 g Bintylaceatat verdünnt. Die so erhaltene Überzugsmasse wurde analog Beispiel A verarbeitet.

Die anwendungstechnischen Daten sind der nachstehenden Tabelle zu entnehmen.

| Beispiel | Pendeldämpfung nach DIN 53 157 [sec] | |
|---|---|---|
| | A | B |
| nach Belichten | 35 | 73 |
| nach Einbrennen | 195 | 153 |

## Patentansprüche (Patentansprüche für folgende(n) Vertragsstaat(en): AT, BE, CH, DE, FR, GB, IT, LI, NL, SE)

1. Strahlungshärtbares Bindemittel, erhältlich durch Umsetzung von
A) Amin-Formaldehyd-Kondensaten mit einem Molverhältnis von Formaldehyden zu Aminogruppen von 1 : 1 bis 2 : 1 mit
B) mindestens eine freie Hydroxylgruppe aufweisenden Estern der Acrylsäure oder der Methacrylsäure mit Polyalkoholen, die zwei bis vier alkoholische Hydroxylgruppen enthalten, in Gegenwart von Säuren mit einem pK-Wert < 3,0 als Katalysator unter Abdestillieren flüchtiger Reaktionsprodukte bei vermindertem Druck, dadurch gekennzeichnet, daß pro Methyloläquivalent der Komponente A) 0,1 bis 0,3 Hydroxyäquivalente der Komponente B) verwendet werden.

2. Strahlungshärtbares Bindemittel nach Anspruch 1, erhältlich unter Verwendung eines Monoesters der Acrylsäure oder der Methacrylsäure mit gesättigten C₂-C₁₅-Diolen als Komponente B.

3. Strahlungshärtbares Bindemittel nach Anspruch 1, erhältlich unter Verwendung eines Polymerisationsinhibitors C) in Mengen von 0,02 bis 0,4 Gew.-%, bezogen auf B).

4. Strahlungshärtbares Bindemittel nach Anspruch 1 oder 2, erhältlich unter Verwendung einer Komponente A), deren Methylolgruppen partiell oder vollständig mit C₁-C₆-Monoalkoholen verethert sind.

5. Strahlungshärtbares Bindemittel nach einem der Ansprüche 1 bis 3, erhältlich unter Verwendung von Hexamethoxymethylmelamin als Komponente A).

6. Verfahren zur Herstellung eines strahlungshärtbaren Bindemittels gemäß einem der Ansprüche 1 bis 4, in welchem man
A) Amin-Formaldehyd-Kondensate mit einem Molverhältnis von Formaldehyd zu Aminogruppen von 1 : 1 bis 2 : 1 mit B) mindestens eine freie Hydroxylgruppe aufweisenden Ester der Acrylsäure oder der Methacrylsäure mit Polyalkohlen, die zwei bis vier alkoholische Hydroxylgruppen enthalten, in Gegenwart von Säuren mit einem pK < 3,0 als Katalysator unter Abdestillieren leicht flüchtiger Reaktionsprodukte bei vermindertem Druck umsetzt, und das dadurch gekennzeichnet ist, daß pro Methyloläquivalent der Komponente A) 0,1 bis 0,3 Hydroxyäquivalente der Komponente B) verwendet werden.

7. Härtbare Überzugsmassen, enthaltend 10 bis 100 Gew.-% eines Bindemittels gemäß einem der Ansprüche 1 bis 6.

8. Härtbare Überzugsmassen nach Anspruch 7, enthaltend zusätzlich 0 bis 90 Gew.-% weiterer monoolefinisch ungesättigte Gruppen tragende Bindemittel.

9. Härtbare Überzingsmittel nach Anspruch 7 oder 8, enthaltend 0 bis 60 Gew.-% copolymerisierbarer flüssiger organischer Verbindungen.

10. Härtbare Überzingsmittel nach einem der Ansprüche 7 bis 9, enthaltend zusätzlich Pigmente und/oder übliche Hilfsmittel.

11. Härtbare Überzugsmasse nach einem der Ansprüche 6 bis 9, deren Aushärtung durch Strahlenhärtung oder durch Strahlenhärtung in Kombination mit anschließendem Einbrennen erfolgt.

12. Härtbare Überzugsmassen nach einem der Ansprüche 7 bis 11, deren Aushärtung zusätzlich durch Säurekatalyse erfolgt.

13. Beschichteter Gegenstand, erhältlich unter Verwendung von härtbaren überzugsmassen nach einem der Ansprüche 7 bis 12.

## Patentansprüche (Patentansprüche für folgende(n) Vertragsstaat(en): ES)

1. Verfahren zur Herstellung eines strahlungshärtbaren Bindemittels, in welchem man
A) Amin-Formaldehyd-Kondensate mit einem Molverhältnis von Formaldehyd zu Aminogruppen von 1 : 1 bis 2 : 1 mit
B) mindestens eine freie Hydroxylgruppe aufweisenden Estern der Acrylsäure oder der Methacrylsäure mit Polyalkohoen, die zwei bis vier alkoholische Hydroxylgruppen enthalten, in Gegenwart von Säuren mit einem pK < 3,0 als Katalysator unter Abdestillieren leicht flüchtiger Reaktionsprodukte bei vermindertem Druck umsetzt, und das dadurch gekennzeichnet ist, daß pro Methyloläquivalent der Komponente A) 0,1 bis 0,3 Hydroxyäquivalente der Komponente B) verwendet werden.

2. Verfahren zur Herstellung eines strahlungshärtbaren Bindemittels nach Anspruch 1, dadurch gekennzeichnet, daß man einen Monoester der Acrylsäure oder der Methacrylsäure mit gesättigten C₂-C₁₅-Diolen als Komponente B verwendet.

3. Verfahren zur Herstellung eines strahlungshärtbaren Bindemittels nach Anspruch 1, dadurch gekennzeichnet, daß man zusätzlich einen Polymerisationsinhibitor C) in Mengen von 0,02 bis 0,4 Gew.-%, bezogen auf B), einsetzt.

4. Verfahren zur Herstellung eines strahlungshärtbaren Bindemittels nach einem der Ansprüche 1 bis 3, dadurch gekennzeichnet, daß man eine Komponente A) verwendet, deren Methylolgruppen partiell oder vollständig mit C₁-C₆-Monoalkoholen verethert sind.

5. Verfahren zur Herstellung eines strahlungshärtbaren Bindemittels nach einem der Ansprüche 1 bis 4, dadurch gekennzeichnet, daß als Komponente A) Hexamethoxymethylmelamin verwendet wird.

6. Härtbare Überzugsmassen, enthaltend 10 bis 100 Gew.-% eines Bindemittels gemäß einem der Ansprüche 1 bis 5.

7. Härtbare Überzugsmassen nach Anspruch 6, enthaltend zusätzlich 0 bis 90 Gew.-% weiterer monoolefinisch ungesättigte Gruppen tragende Bindemittel.

8. Härtbare Überzugsmittel nach Anspruch 6 oder 7, enthaltend 0 bis 60 Gew.-% copolymerisierbarer flüssiger organischer Verbindungen.

9. Härtbare Überzugsmittel nach einem der Ansprüche 6 bis 8, enthaltend zusätzlich Pigmente und/oder übliche Hilfsmittel.

10. Härtbare Überzugsmasse nach einem der Ansprüche 6 bis 9, deren Aushärtung durch Strahlenhärtung oder durch Strahlenhärtung in Kombination mit anschließendem Einbrennen erfolgt.

11. Härtbare Überzugsmassen nach einem der Ansprüche 6 bis 10, deren Aushärtung zusätzlich durch Säurekatalyse erfolgt.

12. Beschichteter Gegenstand, erhältlich unter Verwendung von härtbaren Überzugsmassen nach einem der Ansprüche 6 bis 11.

## Claims (Claims for the following Contracting State(s): AT, BE, CH, DE, FR, GB, IT, LI, NL, SE)

1. A radiation-curable binder obtainable by reacting
A) an amine/formaldehyde condensate having a molar ratio of formaldehyde to amino groups of from 1 : 1 to 2 : 1 with
B) one or more esters, having a free hydroxyl group, of acrylic acid or of methacrylic acid with polyalcohols which contain from two to four alcoholic hydroxyl groups, in the presence of an acid having a pK of < 3.0 as a catalyst, with removal of volatile reaction products by distillation under reduced pressure, wherein from 0.1 to 0.3 hydroxyl equivalent of component B) is used per methylol equivalent of component A).

2. A radiation-curable binder as claimed in claim 1, obtainable using a monoester of acrylic acid or of methacrylic acid with a saturated C₂-C₁₅-diol as component B.

3. A radiation-curable binder as claimed in claim 1, obtainable using a polymerization inhibitor C) in an amount of from 0.02 to 0.4% by weight, based on B).

4. A radiation-curable binder as claimed in claim 1 or 2, obtainable using a component A) whose methylol groups have been partially or completely etherified with C₁-C₆-monoalcohols.

5. A radiation-curable binder as claimed in any of claims 1 to 3, obtainable using hexamethoxymethylmelamine as component A).

6. A process for the preparation of a radiation-curable binder as claimed in any of claims 1 to 4, in which
A) an amine/formaldehyde condensate having a molar ratio of formaldehyde to amino groups of from 1 : 1 to 2 : 1 is reacted with
B) one or more esters, having a free hydroxyl group, of acrylic acid or of methacrylic acid with polyalcohols which contain from two to four alcoholic hydroxyl groups, in the presence of an acid having a pK of < 3.0 as a catalyst, with removal of readily volatile reaction products by distillation under reduced pressure, wherein from 0.1 to 0.3 hydroxyl equivalent of component B) is used per methylol equivalent of component A).

7. A curable coating material containing from 10 to 100% by weight of a binder as claimed in any of claims 1 to 6.

8. A curable coating material as claimed in claim 7, additionally containing from 0 to 90% by weight of other binders which carry monoolefinically unsaturated groups.

9. A curable coating material as claimed in claim 7 or 8, containing from 0 to 60% by weight of copolymerizable liquid organic compounds.

10. A curable coating material as claimed in any of claims 7 to 9, additionally containing pigments and/or conventional assistants.

11. A curable coating material as claimed in any of claims 7 to 10, which is cured by radiation curing alone or in combination with subsequent baking.

12. A curable coating material as claimed in any of claims 7 to 11, which is additionally cured by acid catalysis.

13. A coated article obtainable using a curable coating material as claimed in any of claims 7 to 12.

## Claims (Claims for the following Contracting State(s): ES)

1. A process for the preparation of a radiation-curable binder, in which
A) an amine/formaldehyde condensate having a molar ratio of formaldehyde to amino groups of from 1 : 1 to 2 : 1 is reacted with
B) one or more esters, having a free hydroxyl group, of acrylic acid or of methacrylic acid with polyalcohols which contain from two to four alcoholic hydroxyl groups, in the presence of an acid having a pK of < 3.0 as a catalyst, with removal of readily volatile reaction products by distillation under reduced pressure, wherein from 0.1 to 0.3 hydroxyl equivalent of component B) is used per methylol equivalent of component A).

2. A process for the preparation of a radiation-curable binder as claimed in claim 1, wherein a monoester of acrylic acid or of methacrylic acid with a saturated C₂-C₁₅-diol as component B is used.

3. A process for the preparation of a radiation-curable binder as claimed in claim 1, wherein a polymerization inhibitor C) in an amount of from 0.02 to 0.4% by weight, based on B), is additionally used.

4. A process for the preparation of a radiation-curable binder as claimed in any of claims 1 to 3, wherein a component A) whose methylol groups have been partially or completely etherified with C₁-C₆-monoalcohols is used.

5. A process for the preparation of a radiation-curable binder as claimed in any of claims 1 to 4, wherein hexamethoxymethylmelamine is used as component A).

6. A curable coating material containing 10 to 100% by weight of a binder as claimed in any of claims 1 to 5.

7. A curable coating material as claimed in claim 6, additionally containing from 0 to 90% by weight of other binders which carry monoolefinically unsaturated groups.

8. A curable coating material as claimed in claim 6 or 7, containing from 0 to 60% by weight of copolymerizable liquid organic compounds.

9. A curable coating material as claimed in any of claims 6 to 8, additionally containing pigments and/or conventional assistants.

10. A curable coating material as claimed in any of claims 6 to 9, which is cured by radiation curing alone or in combination with subsequent baking.

11. A curable coating material as claimed in any of claims 6 to 10, which is additionally cured by acid catalysis.

12. A coated article obtainable using a curable coating material as claimed in any of claims 6 to 11.

## Revendications (Revendications pour l'(les) Etat(s) contractant(s) suivant(s): AT, BE, CH, DE, FR, GB, IT, LI, NL, SE)

1. Liant durcissable sous l'action de rayonnements, obtenu par réaction :
A) de condensats amine-formaldéhyde d'un rapport molaire formaldéhyde/groupes amino de 1:1 à 2:1, avec
B) des esters, contenant au moins un groupe hydroxy libre, de l'acide acrylique ou de l'acide méthacrylique et de polyalcools contenant 2 à 4 groupes hydroxy alcooliques, en présence d'acides ayant une valeur de pK inférieure à 3,0 qui servent de catalyseurs, avec distillation des produits de réaction volatils sous vide, caractérisé en ce que l'on utilise de 0,1 à 0,3 équivalent de groupes hydroxy du composant B) par équivalent de groupes méthylol du composant A).

2. Liant durcissable sous l'action de rayonnements selon la revendication 1, obtenu par utilisation d'un monoester de l'acide acrylique ou de l'acide méthacrylique et de diol saturé en C₂-C₁₅ en tant que composant B).

3. Liant durcissable sous l'action de rayonnements selon la revendication 1, obtenu avec utilisation d'un inhibiteur de polymérisation C) en quantité de 0,02 à 0,4% du poids de B).

4. Liant durcissable sous l'action de rayonnements selon la revendication 1 ou 2, obtenu par utilisation d'un composant A) dont les groupes méthylol sont éthérifiés en totalité ou en partie par des monoalcools en C₁-C₆.

5. Liant durcissable sous l'action de rayonnements selon une des revendications 1 à 3, obtenu par utilisation de l'hexaméthoxyméthylmélamine en tant que composant A).

6. Procédé de préparation d'un liant durcissable sous l'action de rayonnements selon une des revendications 1 à 4, dans lequel on fait réagir:
A) des condensats amine-formaldéhyde d'un rapport molaire formaldényde/groupes amino de 1:1 à 2:1, avec
B) des esters de l'acide acrylique ou de l'acide méthacrylique, contenant au moins un groupe hydroxy libre, et de polyalcools contenant 2 à 4 groupes hydroxy alcooliques, en présence d'acides ayant une valeur de pK inférieure à 3,0 en tant que catalyseurs, avec distillation des produits de réaction volatils sous vide, caractérisé en ce que l'on utilise de 0,1 à 0,3 équivalent de groupes hydroxy du composant B) par équivalent de groupes méthylol du composant A).

7. Masses de revêtement durcissables contenant 10 à 100 % en poids d'un liant selon une des revendications 1 à 6.

8. Masses de revêtement durcissables selon la revendication 7, contenant en outre 0 à 90 % en poids d'autres liants contenant des groupes à insaturation mono-oléfinique.

9. Produit de revêtement durcissables selon la revendication 7 ou 8, contenant à 0 à 60 % en poids de composé organiques liquides copolymérisables.

10. Produits de revêtement durcissables selon une des revendications 7 à 9, contenant en outre des pigments et/ou des produits auxiliaires usuels.

11. Masses de revêtement durcissables selon une des revendications 6 à 9, dont le durcissement est réalisé par exposition à des rayonnements ou par exposition à des rayonnements en combinaison avec une cuisson subséquente.

12. Masses de revêtement durcissables selon une des revendications 7 à 11, dont le durcissement est en outre réalisé avec catalyse par un acide.

13. Article revêtu obtenu par utilisation de masses de revêtement durcissables selon une des revendications 7 à 12.

## Revendications (Revendications pour l'(les) Etat(s) contractant(s) suivant(s): ES)

1. Procédé pour la préparation d'un liant durcissable sous l'action de rayonnements, dans lequel on fait réagir :
A) des condensats amine-formaldéhyde d'un rapport molaire formadéhyde/groupes amino de 1:1 à 2:1, avec
B) des esters de l'acide acrylique ou de l'acide méthacrylique, contenant au moins un groupe hydroxy libre, et de polyalcools contenant 2 à 4 atomes hydroxy alcooliques, en présence d'acides ayant une valeur de pK inférieure à 3,0 qui servent de catalyseurs, avec distillation des produits de réaction volatils sous vide, caractérisé en ce que l'on utilise de 0,1 à 0,3 équivalent de groupes hydroxy du composant B) par équivalent de groupes méthylol du composant A).

2. Procédé pour la préparation d'un liant durcissable sous l'action de rayonnements selon la revendication 1, caractérisé en ce que l'on utilise un monoester de l'acide acrylique ou de l'acide méthacrylique et de diol saturé en C₂-C₁₅ en tant que composant B).

3. Procédé de préparation d'un liant durcissable sous l'action de rayonnements selon la revendication 1, caractérisé en ce que l'on utilise en outre un inhibiteur de polymérisation C) en quantité de 0,02 à 0,4 % du poids de B).

4. Procédé de préparation d'un liant durcissable sous l'action de rayonnements selon une des revendications 1 à 3, caractérisé en ce que l'on utilise un composant A) dont les groupes méthylol sont éthérifiés en totalité ou en partie par des mono-alcools en C₁-C₆.

5. Procédé de préparation d'un liant durcissable sous l'action de rayonnements selon une des revendications 1 à 4, caractérisé en ce que l'on utilise en tant que composant A) l'hexaméthoxyméthylmélamine.

6. Masses de revêtement durcissables, contenant 10 à 100 % en poids d'un liant selon une des revendications 1 à 5.

7. Masses de revêtement durcissables selon la revendication 6, contenant en outre 0 à 90 % en poids d'autres liants contenant des groupes à insaturation mono-oléfinique.

8. Masses de revêtement durcissables sous l'action de rayonnements selon la revendication 6 ou 7, contenant 0 o 60 % en poids de composés organiques liquides copolymérisables.

9. Masses de revêtement durcissables selon l'une des revendications 6 à 8, contenant en outre des pigments et/ou des produits auxiliaires usuels.

10. Masses de revêtement durcissables selon l'une des revendications 6 à 9, dont le durcissement est provoqué par exposition à des rayonnements ou par exposition à des rayonnements en combinaison avec une cuisson subséquente.

11. Masses de revêtement durcissables selon l'une des revendications 6 à 10, dont le durcissement est en outre réalisé avec catalyse par un acide.

12. Article revêtu obtenu par utilisation de masses de revêtement durcissables selon une des revendications 6 à 11.
